# EUROPEAN PATENT APPLICATION

(11) **EP 4 618 498 A1**
(43) Date of publication of application: **17.09.2025**
(21) Application number: 24777555.4
(22) Date of filing: 19.02.2024
(51) Int. Cl.: H04L 41/40

(54) **METHOD AND DEVICE FOR RESTARTING HOSTS IN BATCHES, AND STORAGE MEDIUM**

(30) Priority: 24.03.2023 CN 202310333863
(71) Applicant: Huawei Technologies Co., Ltd., Shenzhen, Guangdong 518129 (CN)
(72) Inventor: ZHANG, Gangqiang, Shenzhen, Guangdong 518129 (CN); YANG, Lian, Shenzhen, Guangdong 518129 (CN)
(74) Representative: MERH-IP Matias Erny Reichl Hoffmann Patentanwälte PartG mbB
(86) International application number: PCT/CN2024/077543
(87) International publication number: WO 2024/198762

(57) **Abstract**

Embodiments of this application provide a method and an apparatus for restarting hosts in batches, and a storage medium. The method may include: obtaining, based on a virtual machine anti-affinity relationship, a correspondence between virtual machines and hosts, and a maximum proportion of a quantity of virtual machines that can be shut down by network elements, a plurality of classification results between hosts and virtual machines in a to-be-restarted cloud OS, and conflicting virtual machines corresponding to each batch of hosts in each classification result; performing simulated live migration evaluation on the conflicting virtual machines corresponding to each batch of hosts in each classification result of the plurality of classification results, to obtain a target classification result, where the target classification result is a classification result that has a smallest batch quantity in the plurality of classification results and in which conflicting virtual machines corresponding to each batch of hosts can be migrated to another batch of hosts; and separately performing a restart operation on each batch of hosts in the cloud OS based on the target classification result. **In** this way, duration required for a service can be reduced, and it can be ensured that the service is not interrupted.

## Description

This application claims priority to Chinese Patent Application No. 202310333863.X, filed with the China National Intellectual Property Administration on March 24, 2023 and entitled "METHOD AND APPARATUS FOR RESTARTING HOSTS IN BATCHES, AND STORAGE MEDIUM", which is incorporated herein by reference in its entirety.

### TECHNICAL FIELD

This application relates to the field of communication technologies, and in particular, to a method and an apparatus for restarting hosts in batches, and a storage medium.

### BACKGROUND

A network function virtualization (Network Function Virtualization, NFV) technology may be simply understood as migrating functions of network elements used in a telecommunication network from a current dedicated hardware platform to a general commercial-off-the-shelf (COTS, Commercial-off-the-shelf) server. The NFV technology is used to convert the network elements used in the telecommunication network into independent applications, which may be flexibly deployed on a unified infrastructure platform constructed based on standard servers, storage devices, switches, and other devices. The virtualization technology is used to perform resource pooling and virtualization on an infrastructure hardware device, and provide virtual resources to upper-layer applications, to implement decoupling between applications and hardware, so that virtual resources can be quickly added for each application to quickly increase a system capacity, or virtual resources can be quickly reduced to reduce a system capacity, thereby greatly improving network resilience. General COTS servers are used to form a shared resource pool, so that a hardware device does not need to be independently deployed for a newly developed service, thereby greatly shortening a rollout period of the new service.

A basis of the NFV technology includes a cloud computing technology and a virtualization technology. Hardware devices such as general COTS computing, storage, and network devices may be decomposed into multiple virtual resources by using the virtualization technology for various upper-layer applications to use. The virtualization technology is used to implement decoupling between applications and hardware, greatly increasing a virtual resource provision speed. The cloud computing technology can be used to implement flexible scaling of applications, to match virtual resources with service loads. This increases utilization of virtual resources, and increases a response rate of the system.

In the related art, all virtual machines on a host are shut down in advance, and the shutdown virtual machines are restarted after the host is restarted to take effect to a later version. For example, there are four hosts, and two virtual machines are deployed on each host. Step 1: Shut down all the virtual machines on the four hosts. Step 2: Restart the four hosts, and upgrade a cloud OS to a later version. Step 3: Start all the virtual machines on the four hosts. However, in this manner, after the virtual machines are shut down, because services provided by all the virtual machines are interrupted for more than 30 min, the services need to be switched from a current site to another site, reducing service reliability.

### SUMMARY

This application discloses a method and an apparatus for restarting hosts in batches, and a storage medium, to reduce duration required for a service and ensure that the service is not interrupted.

According to a first aspect, an embodiment of this application provides a method for restarting hosts in batches. The method may include:
obtaining, based on a virtual machine anti-affinity relationship, a correspondence between virtual machines and hosts, and a maximum proportion of a quantity of virtual machines that can be shut down by network elements, a plurality of classification results between hosts and virtual machines in the to-be-restarted cloud operating system OS, and conflicting virtual machines corresponding to each batch of hosts in each classification result, where each classification result corresponds to a different host batch quantity, and each batch of hosts includes at least one host;
performing simulated live migration evaluation on the conflicting virtual machines corresponding to each batch of hosts in each classification result of the plurality of classification results, to obtain a target classification result, where the target classification result is a classification result that has a smallest batch quantity in the plurality of classification results and in which conflicting virtual machines corresponding to each batch of hosts can be migrated to another batch of hosts; and
separately performing a restart operation on each batch of hosts in the cloud OS based on the target classification result.

In this embodiment of this application, a plurality of classification results between hosts and virtual machines in a to-be-restarted cloud OS and conflicting virtual machines corresponding to each batch of hosts in each classification result are obtained based on a virtual machine anti-affinity relationship and a maximum proportion of a quantity of virtual machines that can be shut down by network elements, and simulated live migration evaluation is performed on the conflicting virtual machines corresponding to each batch of hosts in each classification result, to determine a target classification result with a smallest batch quantity and meets a resource requirement. A restart operation is then separately performed on each batch of hosts in the cloud OS based on the target classification result. In this way, batch division and batch compression algorithms (for example, a greedy algorithm or a convex optimization algorithm) are introduced to ensure that virtual machine services are not affected during cloud OS upgrade, and minimize upgrade duration. Alternatively, when servers whose operations and maintenance has been stopped are replaced in batches, or another operations and maintenance operation that requires restarting hosts in batches is performed on the cloud OS, the service duration can be minimized without service interruption.

In a possible implementation, that the plurality of classification results between the hosts and the virtual machines in the to-be-restarted cloud operating system OS, and the conflicting virtual machines corresponding to each batch of hosts in each classification result are obtained based on the virtual machine anti-affinity relationship, the correspondence between virtual machines and hosts, and the maximum proportion of a quantity of virtual machines that can be shut down by network elements includes:
obtaining, based on the virtual machine anti-affinity relationship, the correspondence between virtual machines and hosts, and the maximum proportion of a quantity of virtual machines that can be shut down by network elements, N classification results and conflicting virtual machines corresponding to each batch of hosts in each classification result of the N classification results, where
for an i^{th} classification result, the method further includes:
   obtaining a batch with a smallest host quantity in the i^{th} classification result, where i is not less than 1;
   transferring hosts in the batch with the smallest host quantity to a target batch based on conflicting virtual machines corresponding to each batch of hosts in the i^{th} classification result, to obtain an (i+1)^{th} classification result and conflicting virtual machines corresponding to each batch of hosts in the (i+1)^{th} classification result, where a batch quantity in the (i+1)^{th} classification result is less than a batch quantity in the i^{th} classification result, the target batch is a batch other than the batch with the smallest host quantity in the i^{th} classification result, and a quantity of conflicting virtual machines between the hosts in the batch with the smallest host quantity and hosts in the target batch is the smallest; and
   if i+1 is less than a preset value, setting i=i+1, and repeatedly performing the foregoing steps; or if i+ 1 is equal to the preset value, obtaining the plurality of classification results between the network element and the virtual machines, and the conflicting virtual machines corresponding to each batch of hosts in each classification result, where when i=1, the 1^{st} classification result is a classification result with a largest batch quantity.

In this example, a cloud server first obtains the classification result with the largest batch quantity. For example, the classification result with the largest batch quantity can meet the virtual machine anti-affinity relationship and the maximum proportion of a quantity of virtual machines that can be shut down by network elements. Processing is then performed based on the classification result, to obtain a classification result with a second largest batch quantity, and processing is performed based on the classification result with the second largest batch quantity, to obtain a classification result with a batch quantity less than that in the foregoing classification result. By analogy, a plurality of classification results may be obtained.

In a possible implementation, that the plurality of classification results between the hosts and the virtual machines in the to-be-restarted cloud operating system OS, and the conflicting virtual machines corresponding to each batch of hosts in each classification result are obtained based on the virtual machine anti-affinity relationship, the correspondence between virtual machines and hosts, and the maximum proportion of a quantity of virtual machines that can be shut down by network elements includes:
obtaining, based on the virtual machine anti-affinity relationship, the correspondence between virtual machines and hosts, the maximum proportion of a quantity of virtual machines that can be shut down by network elements, and a plurality of preset values, the plurality of classification results between the hosts and the virtual machines in the to-be-restarted cloud operating system OS, and the conflicting virtual machines corresponding to each batch of hosts in each classification result, where the plurality of preset values correspond to the plurality of classification results.

In this example, the plurality of preset values are set, so that the plurality of classification results can be simultaneously obtained based on the virtual machine anti-affinity relationship, the correspondence between virtual machines and hosts, and the maximum proportion of a quantity of virtual machines that can be shut down by network elements. For example, the hosts are repeatedly iterated and combined by using the convex optimization algorithm, so that the quantity of host batches is the smallest and a quantity of conflicting virtual machines is the smallest, and the plurality of classification results can be further obtained.

In a possible implementation, that simulated live migration evaluation is performed on the conflicting virtual machines corresponding to each batch of hosts in each classification result of the plurality of classification results, to obtain the target classification result includes:
performing, in ascending order of batch quantities, simulated live migration evaluation on the conflicting virtual machines corresponding to each batch of hosts in each classification result of the plurality of classification results, to obtain the target classification result, where
when simulated live migration evaluation is performed on a j^{th} classification result in the plurality of classification results, the method further includes:
   sequentially performing live migration simulation on conflicting virtual machines corresponding to each batch of hosts in the j^{th} classification result; and
   if the j^{th} classification result does not meet that conflicting virtual machines corresponding to each batch of hosts each correspond to a target host, setting j=j+1, and repeatedly performing the foregoing steps; or if the conflicting virtual machines corresponding to each batch of hosts in the j^{th} classification result each correspond to a target host, using the j^{th} classification result as the target classification result, where the target host and the host corresponding to the conflicting virtual machine are in different batches, and a remaining resource corresponding to the target host is not less than a migration resource corresponding to the conflicting virtual machine; and when j=1, the first classification result is a classification result with a smallest batch quantity in the plurality of classification results.

In this example, it is evaluated whether there are enough resources on other batches of hosts in a live network environment to meet a live migration condition of conflicting virtual machines in a batch of hosts that is to be restarted and take effect, to finally select an optimal batch. A batch quantity corresponding to the optimal batch is a smallest batch quantity corresponding to the plurality of classification results. In this way, the upgrade duration can be minimized without service interruption.

According to a second aspect, this application provides an apparatus for restarting hosts in batches, including:
a dividing module, configured to obtain, based on a virtual machine anti-affinity relationship, a correspondence between virtual machines and hosts, and a maximum proportion of a quantity of virtual machines that can be shut down by network elements, a plurality of classification results between hosts and virtual machines in the to-be-restarted cloud operating system OS, and conflicting virtual machines corresponding to each batch of hosts in each classification result, where each classification result corresponds to a different host batch quantity, and each batch of hosts includes at least one host;
an evaluating module, configured to perform simulated live migration evaluation on the conflicting virtual machines corresponding to each batch of hosts in each classification result of the plurality of classification results, to obtain a target classification result, where the target classification result is a classification result that has a smallest batch quantity in the plurality of classification results and in which conflicting virtual machines corresponding to each batch of hosts can be migrated to another batch of hosts; and
an operating module, configured to separately perform a restart operation on each batch of hosts in the cloud OS based on the target classification result.

In a possible implementation, the dividing module is configured to:
obtain, based on the virtual machine anti-affinity relationship, the correspondence between virtual machines and hosts, and the maximum proportion of a quantity of virtual machines that can be shut down by network elements, N classification results and conflicting virtual machines corresponding to each batch of hosts in each classification result of the N classification results, where
for an i^{th} classification result, the dividing module is further configured to:
   obtain a batch with a smallest host quantity in the i^{th} classification result, where i is not less than 1;
   transfer hosts in the batch with the smallest host quantity to a target batch based on conflicting virtual machines corresponding to each batch of hosts in the i^{th} classification result, to obtain an (i+1)^{th} classification result and conflicting virtual machines corresponding to each batch of hosts in the (i+1)^{th} classification result, where a batch quantity in the (i+1)^{th} classification result is less than a batch quantity in the i^{th} classification result, the target batch is a batch other than the batch with the smallest host quantity in the i^{th} classification result, and a quantity of conflicting virtual machines between the hosts in the batch with the smallest host quantity and hosts in the target batch is the smallest; and
   if i+1 is less than a preset value, set i=i+1, and repeatedly perform the foregoing steps; or if i+1 is equal to the preset value, obtain the plurality of classification results between the network element and the virtual machines, and the conflicting virtual machines corresponding to each batch of hosts in each classification result, where when i=1, the 1^{st} classification result is a classification result with a largest batch quantity.

In a possible implementation, the dividing module is configured to:
obtain, based on the virtual machine anti-affinity relationship, the correspondence between virtual machines and hosts, the maximum proportion of a quantity of virtual machines that can be shut down by network elements, and a plurality of preset values, the plurality of classification results between the hosts and the virtual machines in the to-be-restarted cloud operating system OS, and the conflicting virtual machines corresponding to each batch of hosts in each classification result, where the plurality of preset values correspond to the plurality of classification results.

In a possible implementation, the evaluating module is configured to:
perform, in ascending order of batch quantities, simulated live migration evaluation on the conflicting virtual machines corresponding to each batch of hosts in each classification result of the plurality of classification results, to obtain the target classification result, where
when simulated live migration evaluation is performed on a j^{th} classification result in the plurality of classification results, the evaluating module is further configured to:
   sequentially perform live migration simulation on conflicting virtual machines corresponding to each batch of hosts in the j^{th} classification result; and
   if the j^{th} classification result does not meet that conflicting virtual machines corresponding to each batch of hosts each correspond to a target host, set j=j+1, and repeatedly perform the foregoing steps; or if the conflicting virtual machines corresponding to each batch of hosts in the j^{th} classification result each correspond to a target host, use the j^{th} classification result as the target classification result, where the target host and the host corresponding to the conflicting virtual machine are in different batches, and a remaining resource corresponding to the target host is not less than a migration resource corresponding to the conflicting virtual machine; and when j=1, the first classification result is a classification result with a smallest batch quantity in the plurality of classification results.

According to a third aspect, this application provides an apparatus for restarting hosts in batches, including a processor and a memory, where the memory is configured to store program code, and the processor is configured to invoke the program code to perform the method provided in any possible implementation of the first aspect.

According to a fourth aspect, this application provides a computer-readable storage medium, where the computer-readable storage medium stores a computer program, and the computer program is executed by a processor to perform the method provided in any possible implementation of the first aspect.

According to a fifth aspect, this application provides a computer program product. When the computer program product is run on a computer, the computer is enabled to perform the method according to any possible implementation of the first aspect.

According to a sixth aspect, this application provides a chip system. The chip system is used in an electronic device. The chip system includes one or more interface circuits and one or more processors. The interface circuit and the processor are interconnected through a line. The interface circuit is configured to receive a signal from a memory of the electronic device and send the signal to the processor. The signal includes computer instructions stored in the memory. When the processor executes the computer instructions, the electronic device performs the method according to any possible implementation of the first aspect.

It may be understood that the apparatus according to the second aspect, the apparatus according to the third aspect, the computer-readable storage medium according to the fourth aspect, the computer program product according to the fifth aspect, or the chip system according to the sixth aspect provided above are all configured to perform the method according to any one of the first aspect. Therefore, for beneficial effect that can be achieved by the apparatus, the computer storage medium, the computer program product, and the chip system, refer to the beneficial effect in the corresponding method. Details are not described herein again.

### BRIEF DESCRIPTION OF DRAWINGS

The following describes the accompanying drawings used in embodiments of this application.
FIG. 1a is a diagram of an architecture of a system for restarting hosts in batches according to an embodiment of this application;
FIG. 1b is a diagram of an architecture of another system for restarting hosts in batches according to an embodiment of this application;
FIG. 2 is a schematic flowchart of a method for restarting hosts in batches according to an embodiment of this application;
FIG. 3 is a diagram of a simulated live migration evaluation method according to an embodiment of this application;
FIG. 4 is a schematic flowchart of a method for upgrading hosts in batches according to an embodiment of this application;
FIG. 5 is a schematic flowchart of a method for replacing, in batches, servers whose operations and maintenance has been stopped according to an embodiment of this application;
FIG. 6 is a diagram of a structure of an apparatus for restarting hosts in batches according to an embodiment of this application; and
FIG. 7 is a diagram of a structure of another apparatus for restarting hosts in batches according to an embodiment of this application.

### DESCRIPTION OF EMBODIMENTS

The following describes embodiments of this application with reference to the accompanying drawings in embodiments of this application. Terms used in implementations of embodiments of this application are merely used to explain specific embodiments of this application, and are not intended to limit this application.

For ease of understanding, some concepts related to embodiments of this application are described for reference by using examples below. Details are as follows.
1. Live migration of virtual machine: A virtual machine is migrated from one physical server to another physical server. During the migration, services of the virtual machine are not affected.
2. Virtual machine with a single-root I/O virtualization network interface card: A physical network interface card is directly mapped to a virtual machine to improve network forwarding performance of the virtual machine.
3. Local hard disk virtual machine: is a virtual machine whose operating system is deployed on a local disk of a physical server.
4. Non-uniform memory access (Non-Uniform Memory Access, NUMA) affinity virtual machines: If virtual machines are deployed across NUMA nodes, a large performance loss occurs. The NUMA affinity virtual machines support automatic initial NUMA placement for a virtual machine and load balancing. A virtual CPU and a memory of a virtual machine are distributed on a same NUMA node, to reduce a memory access delay and improve performance.
5. Anti-affinity virtual machines: are virtual machines that cannot be deployed on a same physical host.
6. Cloud operating system (Operating System, OS): is also referred to as a cloud computing operating system or cloud computing center operating system, is an operating system supported by cloud computing and cloud storage technologies, and is an overall management and operations system of a cloud computing background data center. The cloud OS is an integrated cloud platform management system that manages massive basic hardware and software resources based on basic hardware resources such as servers, storage devices, and networks and basic software such as single-node operating systems, middleware, and databases.

The foregoing example descriptions of the concepts may be applied in the following embodiments.

In the related art, all virtual machines need to be shut down when a host is restarted. Consequently, services provided by all the virtual machines are interrupted for a long time, and service reliability is reduced. In view of this, this application provides a method for restarting hosts in batches, to reduce upgrade duration and ensure that a service is not interrupted.

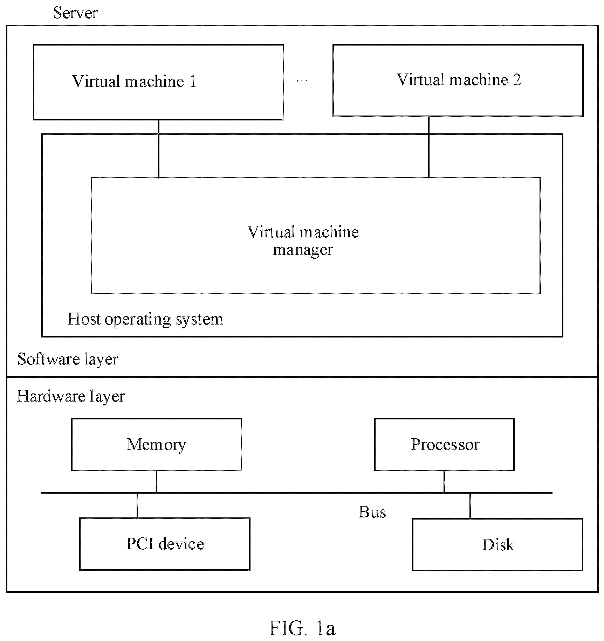

The following describes in detail a system architecture in embodiments of this application with reference to the accompanying drawings. FIG. 1a is a diagram of an architecture of a system for restarting hosts in batches to which an embodiment of this application is applicable. The system may be a server. For example, the server includes a software layer and a hardware layer. The software layer includes virtual machines and a host operating system. The hardware layer includes a processor, a memory, a peripheral component interconnect (Periheral Component Interconnect, PCI) device, and a disk. The processor, the memory, the PCI device, and the disk all communicate with each other through a bus.

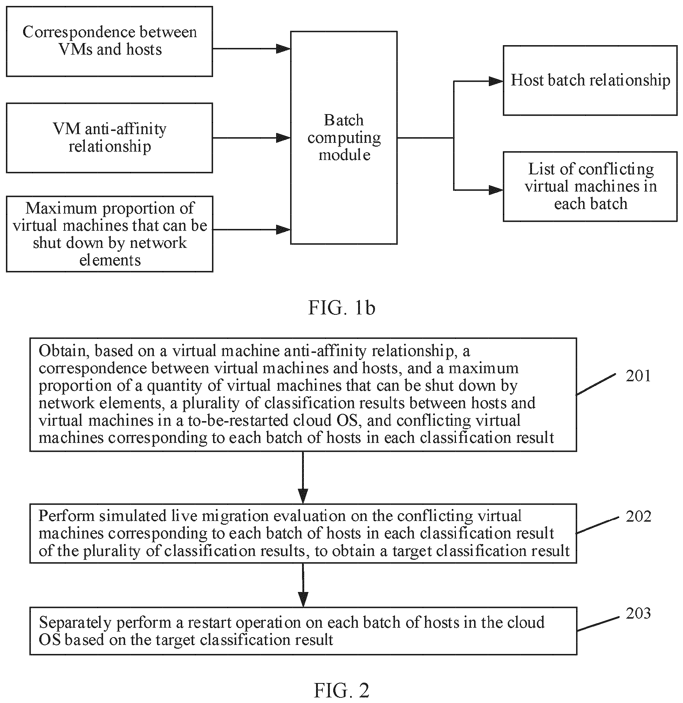

FIG. 1b is a diagram of another system for restarting hosts in batches to which an embodiment of this application is applicable. The system includes a batch computing module of a server. A correspondence between VMs and hosts, a VM anti-affinity relationship, and a maximum proportion of virtual machines that can be shut down by network elements are provided to the batch computing module of the server. In this way, the batch computing module of the server performs processing based on the foregoing information, to output a host batch relationship (namely, a plurality of classification results below) and a conflicting virtual machine relationship in each batch of hosts. For example, the conflicting virtual machine relationship in each batch of hosts may be presented in a form of a list of conflicting virtual machines in each batch.

The foregoing describes an architecture of embodiments of this application. The following describes the method in embodiments of this application in detail.

FIG. 2 is a schematic flowchart of a method for restarting hosts in batches according to an embodiment of this application. Optionally, the method may be applied to the foregoing system for restarting hosts in batches, for example, the system for restarting hosts in batches shown in FIG. 1a. The method for restarting hosts in batches shown in FIG. 2 may include steps 201 to 203. It should be understood that, for ease of description in this application, a sequence of 201 to 203 is used for description, but this is not intended to constitute a limitation that the method is necessarily performed in the foregoing sequence. A performing sequence, performing time, a quantity of performing times, and the like of the foregoing one or more steps are not limited in embodiments of this application. The following uses an example in which steps 201 to 203 in the method for restarting hosts in batches are performed by a server for description. This application is also applicable to other execution bodies. Steps 201 to 203 are specifically as follows.

201: Obtain, based on a virtual machine anti-affinity relationship, a correspondence between virtual machines and hosts, and a maximum proportion of a quantity of virtual machines that can be shut down by network elements, a plurality of classification results between hosts and virtual machines in a to-be-restarted cloud operating system OS, and conflicting virtual machines corresponding to each batch of hosts in each classification result, where each classification result corresponds to a different host batch quantity, and each batch of hosts includes at least one host.

The virtual machine anti-affinity relationship may be understood as that virtual machines in the anti-affinity relationship cannot be deployed on a same physical host. For example, a virtual machine A and a virtual machine B are in the anti-affinity relationship, and cannot be deployed on a host at the same time.

In a possible implementation, anti-affinity types of virtual machines may include the following two types:
1. Active/standby virtual machines: One virtual machine carries all services, and the other virtual machine serves as a standby. When the active virtual machine is faulty, the services are switched to the standby virtual machine.
2. Load balancing virtual machines: All virtual machines carry all services. When some virtual machines are faulty, the remaining virtual machines carry all the services.

A cloud server divides the active and standby virtual machines into different batches, so that the services are switched to the standby virtual machine when the active virtual machine is powered off. In addition, the cloud server groups the load balancing virtual machines into different batches, so that when 30% of the virtual machines are powered off, the remaining 70% virtual machines carry 100% services.

In other words, the virtual machines are grouped into batches based on the anti-affinity types of virtual machines, so that the virtual machines meet the virtual machine anti-affinity relationship.

The correspondence between the virtual machines and the hosts is that, for example, if a virtual machine A is deployed on a host A', the virtual machine A corresponds to the host A'.

The maximum proportion of a quantity of virtual machines that can be shut down by network elements can be understood as a proportion of a quantity of virtual machines that can be shut down by network elements to a total quantity of virtual machines of this type.

When virtual machine batch division is performed, virtual machine batch division can be implemented based on the virtual machine anti-affinity relationship and the maximum proportion of a quantity of virtual machines that can be shut down by network elements.

In a possible implementation, after the virtual machine batch division is performed, the method further includes performing batch division on the hosts, to obtain a plurality of classification results. For example, there are eight hosts: a host 1, a host 2, a host 3, a host 4, a host 5, a host 6, a host 7, and a host 8. One of the classification results may be the host 1/the host 2 and the host 3/the host 4, the host 5 and the host 6/the host 7 and the host 8. In this classification result, the eight hosts are grouped into four batches. In other words, the classification result includes four batches of hosts. For another example, another classification result may be the host 5/the host 1, the host 3, the host 4, and the host 8/the host 2, the host 6, and the host 7. In this classification result, the eight hosts are grouped into three batches. In other words, the classification result includes three batches of hosts. The foregoing is merely an example, and may alternatively be another division manner. This is not limited in this solution.

Table 1 shows a classification result provided in this embodiment of this application.

**Table 1**

| Batch | Host identity | Conflicting virtual machine identity |
|---|---|---|
| 1^{st} batch | Host h | VM 5 |
| 2^{nd} batch | Host d | VM 3 |
| | Host f | VM 1 and VM 9 |
| | Host a | VM 7 |
| 3^{rd} batch | Host c | VM 2 |
| | Host b | VM 4 |
| 4^{th} batch | Host e | VM 6 |
| | Host g | VM 8 |

In a possible implementation, the cloud server may group various types of virtual machines into a host range as small as possible by using a greedy algorithm, a convex optimization algorithm, or the like. The hosts are separately restarted based on a batch division result, for a later cloud OS version to take effect. More batches indicate longer upgrade duration. Fewer batches indicate shorter upgrade duration.

For example, in a first possible implementation, the cloud server may perform classification result division by using the greedy algorithm. Specifically,

N classification results and conflicting virtual machines corresponding to each batch of hosts in each classification result of the N classification results are obtained based on the virtual machine anti-affinity relationship, the correspondence between virtual machines and hosts, and the maximum proportion of a quantity of virtual machines that can be shut down by network elements, where
for an i^{th} classification result,
a batch with a smallest host quantity in the i^{th} classification result is obtained, where i is not less than 1;
hosts in the batch with the smallest host quantity are transferred to a target batch based on conflicting virtual machines corresponding to each batch of hosts in the i^{th} classification result, to obtain an (i+1)^{th} classification result and conflicting virtual machines corresponding to each batch of hosts in the (i+1)^{th} classification result, where a batch quantity in the (i+1)^{th} classification result is less than a batch quantity in the i^{th} classification result, the target batch is a batch other than the batch with the smallest host quantity in the i^{th} classification result, and a quantity of conflicting virtual machines between the hosts in the batch with the smallest host quantity and hosts in the target batch is the smallest; and
if i+1 is less than a preset value, i=i+1 is set, and the foregoing steps are repeatedly performed; or if i+1 is equal to the preset value, the plurality of classification results between the network element and the virtual machines, and the conflicting virtual machines corresponding to each batch of hosts in each classification result are obtained, where when i=1, the 1^{st} classification result is a classification result with a largest batch quantity.

In other words, the cloud server first obtains the classification result with the largest batch quantity. For example, the classification result with the largest batch quantity can meet the virtual machine anti-affinity relationship and the maximum proportion of a quantity of virtual machines that can be shut down by network elements. Processing is then performed based on the classification result, to obtain a classification result with a second largest batch quantity, and processing is performed based on the classification result with the second largest batch quantity, to obtain a classification result with a batch quantity less than that in the foregoing classification result. By analogy, a plurality of classification results may be obtained.

Processing is performed based on the classification result with the largest batch quantity, to obtain the classification result with the second largest batch quantity. For example, hosts in a batch with a smallest host quantity in the classification result with the largest batch quantity may be allocated to another batch in the classification result with the largest batch quantity. In this way, a new batch result may be obtained, and a batch quantity corresponding to the new batch result is less than the classification result with the largest batch quantity. Optionally, when the hosts in the batch with the smallest host quantity in the classification result with the largest batch quantity is allocated to another batch in the classification result with the largest batch quantity, a batch with a smallest quantity of conflicting virtual machines corresponding to the hosts in the batch is selected, so that the hosts in the batch with the smallest host quantity are allocated to the batch. By analogy, a plurality of classification results may be further obtained. The plurality of classification results include different quantities of host batches. Certainly, the quantities of host batches included in the plurality of classification results may alternatively be the same. For example, for a classification result whose batch quantity is any value like 5, there may be a plurality of classification manners. This is not strictly limited in this solution.

After the host is added to another batch, a virtual machine in a host that has active/standby virtual machines and that is in a same batch and whose load balancing proportion exceeds 30% is identified as a conflicting virtual machine, until all hosts in the batch are re-allocated to the another batch.

Optionally, the foregoing steps are repeated until there are three batches obtained through optimization. In other words, when the hosts are grouped into three batches, iteration is stopped. In this way, a plurality of classification results and conflicting virtual machines corresponding to each classification result are obtained.

For another example, in a second possible implementation, the cloud server may perform classification result division by using the convex optimization algorithm. Specifically,
the plurality of classification results between the hosts and the virtual machines in the to-be-restarted cloud operating system OS, and the conflicting virtual machines corresponding to each batch of hosts in each classification result are obtained based on the virtual machine anti-affinity relationship, the correspondence between virtual machines and hosts, the maximum proportion of a quantity of virtual machines that can be shut down by network elements, and a plurality of preset values, where the plurality of preset values correspond to the plurality of classification results.

The plurality of preset values may be, for example, integers such as 3, 4, and 5. Based on each different preset value, a classification result including a different batch quantity may be obtained.

In this example, the plurality of preset values are set, so that the plurality of classification results can be simultaneously obtained based on the virtual machine anti-affinity relationship, the correspondence between virtual machines and hosts, and the maximum proportion of a quantity of virtual machines that can be shut down by network elements. For example, the hosts are repeatedly iterated and combined by using the convex optimization algorithm, so that the quantity of host batches is the smallest and a quantity of conflicting virtual machines is the smallest, and the plurality of classification results can be further obtained. For the descriptions of this part, refer to the foregoing embodiments. Details are not described herein again.

202: Perform simulated live migration evaluation on the conflicting virtual machines corresponding to each batch of hosts in each classification result of the plurality of classification results, to obtain a target classification result, where the target classification result is a classification result that has a smallest batch quantity in the plurality of classification results and in which conflicting virtual machines corresponding to each batch of hosts can be migrated to another batch of hosts.

The target classification result is determined by performing processing based on the obtained plurality of classification results, so that a plurality of hosts are restarted in batches based on the batch division corresponding to the target classification result.

In a possible implementation, that simulated live migration evaluation is performed on the conflicting virtual machines corresponding to each batch of hosts in each classification result of the plurality of classification results, to obtain the target classification result includes:
performing, in ascending order of batch quantities, simulated live migration evaluation on the conflicting virtual machines corresponding to each batch of hosts in each classification result of the plurality of classification results, to obtain the target classification result, where
when simulated live migration evaluation is performed on a j^{th} classification result in the plurality of classification results, the method further includes:
   sequentially performing live migration simulation on conflicting virtual machines corresponding to each batch of hosts in the j^{th} classification result; and
   if the j^{th} classification result does not meet that conflicting virtual machines corresponding to each batch of hosts each correspond to a target host, setting j=j+1, and repeatedly performing the foregoing steps; or if the conflicting virtual machines corresponding to each batch of hosts in the j^{th} classification result each correspond to a target host, using the j^{th} classification result as the target classification result, where the target host and the host corresponding to the conflicting virtual machine are in different batches, and a remaining resource corresponding to the target host is not less than a migration resource corresponding to the conflicting virtual machine; and when j=1, the first classification result is a classification result with a smallest batch quantity in the plurality of classification results.

In other words, simulated live migration evaluation is performed starting from conflicting virtual machines corresponding to a classification result with a small batch quantity. If a live migration evaluation result of the classification result with the small batch quantity meets a preset condition, the classification result with the small batch quantity is directly used as the target classification result. If the live migration evaluation result of the classification result with the small batch quantity does not meet the preset condition, simulated live migration evaluation is performed on conflicting virtual machines corresponding to a classification result with a slightly larger batch quantity. For example, the plurality of classification results obtained in step 201 may include 16 batches, 15 batches, 14 batches, 13 batches, ..., four batches, three batches, or the like. In this case, simulated live migration evaluation is performed starting from the three batches with a small batch quantity. If a live migration evaluation result of the three batches does not meet the preset condition, simulated live migration evaluation is performed starting from the four batches. If a live migration evaluation result of the four batches does not meet the preset condition, simulated live migration evaluation is performed starting from the five batches, and so on. The foregoing steps are repeatedly performed until a live migration evaluation result of a batch meets the preset condition, and a classification result corresponding to the batch is determined as the target classification result.

The preset condition is that the target host and the host corresponding to the conflicting virtual machine are in different batches, and the remaining resource corresponding to the target host is not less than the migration resource corresponding to the conflicting virtual machine. In other words, it is evaluated whether there are enough resources on other batches of hosts in a live network environment to meet a live migration condition of conflicting virtual machines in a batch of hosts that is to be restarted and take effect, to finally select an optimal batch. A batch quantity corresponding to the optimal batch is a smallest batch quantity corresponding to the plurality of classification results. In this way, the upgrade duration can be minimized without service interruption.

The foregoing example is described by using only an example in which simulated live migration evaluation is performed, in ascending order of batch quantities, on conflicting virtual machines corresponding to each batch of hosts in each classification result of the plurality of classification results. Another sequence or the like may be used. This is not limited in this solution.

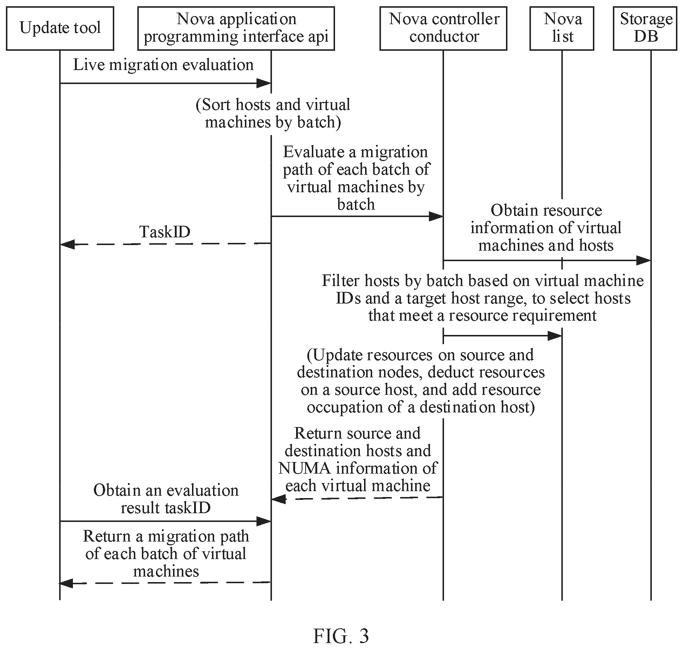

FIG. 3 is a diagram of a simulated live migration evaluation method according to an embodiment of this application. A virtual machine live migration process is simulated iteratively based on a virtual machine identity (Identity, ID), a batch ID, and a target host list. Hosts that meet resource requirements are selected from a specific target host range, and finally all target hosts of virtual machines to be live migrated in the global range are output. Based on batch compression, simulated live migration evaluation is performed on a conflicting virtual machine in each batch in each classification result. The simulated live migration evaluation method may include the following steps:
1: Before upgrade, read specifications of all virtual machines and host resource information from a database and store the specifications and the host resource information into a memory.
   The specification of the virtual machine may be, for example, information such as a central processing unit (Central Processing Unit, CPU), a memory, a bandwidth, and an anti-affinity group of the virtual machine. The host resource information may be, for example, resource information such as a CPU and a memory of each node of the host.
2: Perform live migration simulation on a conflicting virtual machine (for example, the VM 2) in the 1^{st} batch in the memory, where a target host corresponding to the VM 2 is a list of all hosts (for example, a second batch) that are not in the current batch.
3. Record NUMA information of a source host that is live migrated and NUMA information of the target host in the memory, deduct resources such as a CPU, a memory, and a bandwidth of the conflicting virtual machine VM 2 from the source host, and add corresponding resources to the target host.
   The NUMA information of the source host and the NUMA information of the target host may be, for example, location information of hardware of each CPU. For example, the information may be a CPU number, for example, a CPU number 2, namely, numa 2.
4. Perform live migration simulation on the conflicting virtual machines (for example, the VM 5) in the 2^{nd} batch and the VM 2 migrated to this batch in the memory, where the target host is a list of all hosts that are not in the current batch.
5. Similar to step 3, record migration information of the virtual machines, and perform resource adding or deducting on corresponding hosts.
6. Repeat the foregoing steps to complete live migration simulation and computation of the remaining batches.

Based on this, simulated live migration evaluation of conflicting virtual machines in each batch in the classification result can be completed. The foregoing steps are repeatedly performed, to determine the target classification result.

203: Separately perform a restart operation on each batch of hosts in the cloud OS based on the target classification result.

Based on a host batch division result in the determined target classification result, a restart operation is separately performed on each batch of hosts. For example, five batches correspond to the target classification result. Therefore, it takes time of five batches to complete the restart operation of all hosts. Optionally, a restart operation is first performed on the first batch of hosts, a restart operation is performed on the second batch of hosts, a restart operation is performed on the third batch of hosts, a restart operation is performed on the fourth batch of hosts, and finally a restart operation is performed on the fifth batch of hosts, to complete the restart operation on all the hosts.

The restart operation may include restarting all hosts to complete the upgrade, or may be making a host configuration take effect, or replacing a server that is no longer maintained with a new server. This is not limited in this solution.

In this embodiment of this application, a plurality of classification results between hosts and virtual machines in a to-be-restarted cloud OS and conflicting virtual machines corresponding to each batch of hosts in each classification result are obtained based on a virtual machine anti-affinity relationship and a maximum proportion of a quantity of virtual machines that can be shut down by network elements, and simulated live migration evaluation is performed on the conflicting virtual machines corresponding to each batch of hosts in each classification result, to determine a target classification result with a smallest batch quantity and meets a resource requirement. Then, a restart operation is separately performed on each batch of hosts in the cloud OS based on the target classification result. In this way, batch division and batch compression algorithms (for example, a greedy algorithm or a convex optimization algorithm) are introduced to ensure that virtual machine services are not affected during cloud OS upgrade, and minimize upgrade duration. Alternatively, when servers whose operations and maintenance has been stopped are replaced in batches, or another operations and maintenance operation that requires restarting hosts in batches is performed on the cloud OS, the service duration can be minimized without service interruption.

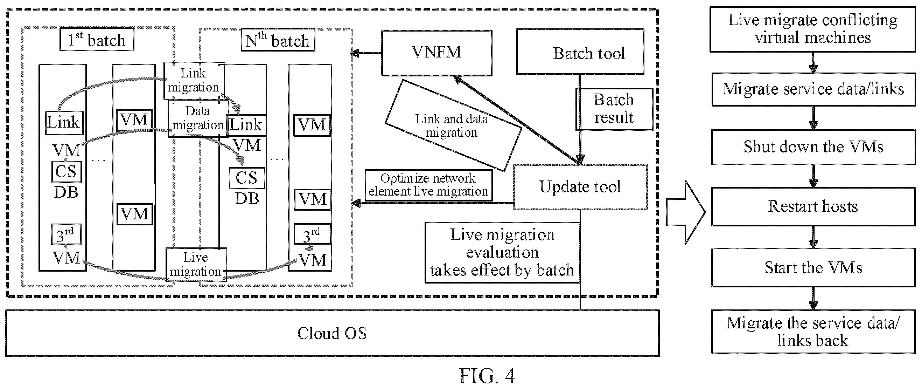

FIG. 4 is a schematic flowchart of a method for upgrading hosts in batches according to an embodiment of this application. Optionally, the method may be applied to the foregoing system for restarting hosts in batches, for example, the system for restarting hosts in batches shown in FIG. 1a. The method for upgrading hosts in batches shown in FIG. 4 may correspond to the following steps 1 to 7. It should be understood that, for ease of description in this application, a sequence of steps 1 to 7 is used for description, but this is not intended to constitute a limitation that the method is necessarily performed in the foregoing sequence. A performing sequence, performing time, a quantity of performing times, and the like of the foregoing one or more steps are not limited in embodiments of this application. The following uses an example in which steps 1 to 7 in the method for upgrading hosts in batches are performed by a server for description. This application is also applicable to other execution bodies. Steps 1 to 7 are specifically as follows.

Step 1: Before upgrade, import a service anti-affinity relationship between virtual machines collected by an upgrade tool to a batch tool for processing, and group all hosts into batches, to obtain a plurality of classification results and conflicting virtual machines corresponding to each batch of hosts in each classification result.

For descriptions of grouping all the hosts into batches, refer to the descriptions in the embodiment shown in FIG. 2. Details are not described herein again.

It should be noted that the upgrade tool in embodiments of this application may be a configuration adjustment module, a server replacement module, or the like. The batch tool may be a cloud server, another processing module, or the like. This is not limited in this solution.

Step 2: Import a compressed batch result generated by the batch tool to the upgrade tool, evaluate feasibility of live migration for reducing a batch quantity, and automatically compute a batch with shortest duration.

For descriptions of determining the batch with the shortest duration, refer to the descriptions in the embodiment shown in FIG. 2. Details are not described herein again.

Step 3: Before restarting the hosts, live migrate a small quantity of virtual machines to another batch of hosts based on a live migration evaluation result in the batch result.

For example, based on the live migration evaluation result, conflicting virtual machines corresponding to each batch of hosts in the corresponding classification result are migrated to another batch of hosts. Optionally, conflicting virtual machines on the first batch of hosts may be first migrated to another batch of hosts.

Step 4: Before restarting the hosts, the upgrade tool instructs a virtualized network function module manager (Virtualized Network Function Manager, VNFM) to migrate service data of virtual machines on a to-be-upgraded batch of hosts to another batch.

After the conflicting virtual machines on the first batch of hosts are migrated to the another batch of hosts, the service data of the virtual machines on the batch of hosts is further migrated to the another batch.

Step 5: Restart the hosts and upgrade the cloud OS to a later version.

After the conflicting virtual machines corresponding to the first batch of hosts are migrated, the first batch of hosts is restarted, to upgrade the hosts.

Step 6: After the hosts are restarted, the upgrade tool instructs the VNFM to migrate the migrated service data back to the virtual machines corresponding to the batch of hosts, to complete a batch upgrade process.

After the hosts are restarted, the upgrade of the hosts is completed. Further, the migrated service data may be migrated back to the virtual machines corresponding to the batch of hosts.

Step 7: Repeat step 3 to step 6, to complete upgrade processes of other batches.

For example, conflicting virtual machines corresponding to the second batch of hosts, the third batch of hosts, the fourth batch of hosts, and the like are migrated in sequence, to upgrade each batch of hosts.

According to the method, it is ensured that virtual machine services are not affected during cloud OS upgrade, and the upgrade duration is minimized.

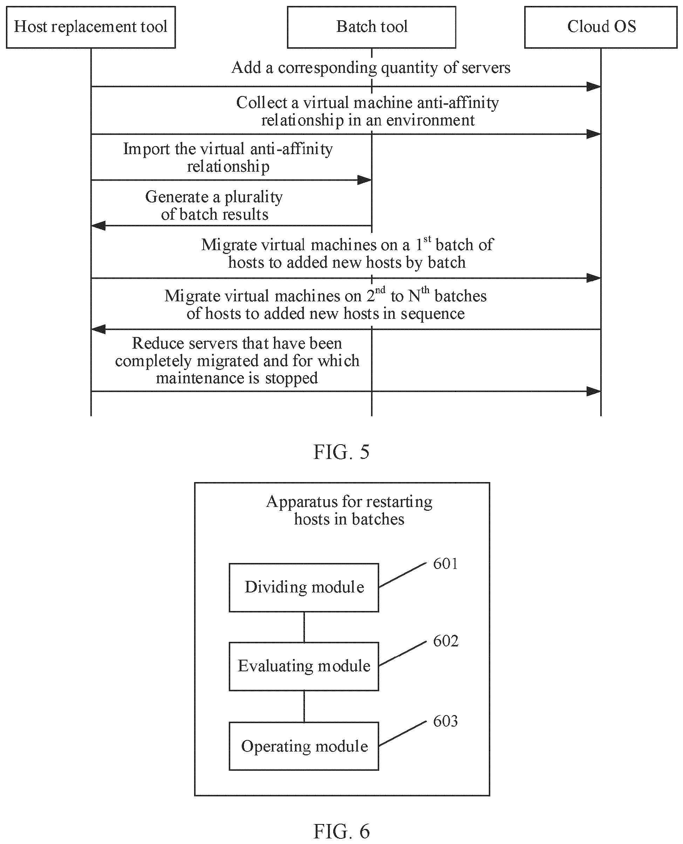

FIG. 5 is a schematic flowchart of a method for replacing, in batches, servers whose operations and maintenance has been stopped according to an embodiment of this application. Optionally, the method may be applied to the foregoing system for restarting hosts in batches, for example, the system for restarting hosts in batches shown in FIG. 1a. The method for replacing servers in batches shown in FIG. 5 may correspond to the following steps 1 to 5. It should be understood that, for ease of description in this application, a sequence of steps 1 to 5 is used for description, but this is not intended to constitute a limitation that the method is necessarily performed in the foregoing sequence. A performing sequence, performing time, a quantity of performing times, and the like of the foregoing one or more steps are not limited in embodiments of this application. The following uses an example in which steps 1 to 5 in the method for upgrading hosts in batches are performed by a server for description. This application is also applicable to other execution bodies. The method for replacing, in batches, servers whose operations and maintenance is stopped includes the following steps.

Step 1: Based on a plan, add servers with a same CPU and memory capacity to a same cloud OS for management in advance.

Step 2: A host replacement tool collects a virtual machine anti-affinity relationship in an environment.

Step 3: The host replacement tool imports the collected virtual machine anti-affinity relationship to a batch tool, so that the batch tool can generate a compressed batch result.

The compressed batch result is the target classification result in the embodiment shown in FIG. 2. For descriptions of this part, refer to the descriptions of step 201 and step 202 in the embodiment shown in FIG. 2. Details are not described herein again.

Step 4: Migrate, by batch, virtual machines on the hosts to added new servers.

Based on the target classification result, the virtual machines on the hosts are migrated, in batches, to the added new servers.

Step 5: Reduce the servers for which operations and maintenance have been stopped in the cloud OS.

In this example, the servers whose operations and maintenance has been stopped are replaced in batches, to ensure that virtual machine services are not affected, and minimize the service duration. It should be noted that embodiments of this application may be further used for another operations and maintenance operation of the cloud OS that needs to restart hosts in batches. This is not limited in this solution.

It should be noted that, in various embodiments of this application, unless otherwise stated or there is a logic conflict, terms and/or descriptions in various embodiments are consistent and may be mutually referenced, and technical features in different embodiments may be combined based on an internal logical relationship thereof, to form a new embodiment.

The methods in embodiments of this application are described in detail above. Apparatuses in embodiments of this application are provided below. It may be understood that, in the apparatus embodiments of this application, division into a plurality of units or modules is merely logical division based on functions, and is not intended to limit a specific structure of the apparatus. During specific implementation, some functional modules may be subdivided into more functional modules that are smaller, and some functional modules may be combined into one functional module. However, regardless of whether these functional modules are subdivided or combined, a general procedure performed by the apparatus is the same. For example, some apparatuses include a receiving unit and a sending unit. In some designs, the sending unit and the receiving unit may alternatively be integrated into a communication unit, and the communication unit may implement functions implemented by the receiving unit and the sending unit. Usually, each unit corresponds to respective program code (or program instructions). When the program code corresponding to the unit is run on a processor, the unit is controlled by a processing unit to perform a corresponding procedure to implement a corresponding function.

An embodiment of this application further provides an apparatus configured to implement any one of the foregoing methods. For example, an apparatus for restarting hosts in batches is provided, including modules (or means) configured to implement steps performed by the server in any one of the foregoing methods.

For example, FIG. 6 is a diagram of a structure of an apparatus for restarting hosts in batches according to an embodiment of this application. The apparatus for restarting hosts in batches is configured to implement the method for restarting hosts in batches, for example, the methods for restarting hosts in batches shown in FIG. 2, FIG. 4, and FIG. 5.

As shown in FIG. 6, the apparatus may include a dividing module 601, an evaluating module 602, and an operating module 603. Specifically,
a dividing module 601, configured to obtain, based on a virtual machine anti-affinity relationship, a correspondence between virtual machines and hosts, and a maximum proportion of a quantity of virtual machines that can be shut down by network elements, a plurality of classification results between hosts and virtual machines in the to-be-restarted cloud operating system OS, and conflicting virtual machines corresponding to each batch of hosts in each classification result, where each classification result corresponds to a different host batch quantity, and each batch of hosts includes at least one host;
an evaluating module 602, configured to perform simulated live migration evaluation on the conflicting virtual machines corresponding to each batch of hosts in each classification result of the plurality of classification results, to obtain a target classification result, where the target classification result is a classification result that has a smallest batch quantity in the plurality of classification results and in which conflicting virtual machines corresponding to each batch of hosts can be migrated to another batch of hosts; and
an operating module 603, configured to separately perform a restart operation on each batch of hosts in the cloud OS based on the target classification result.

In a possible implementation, the dividing module 601 is configured to:
obtain, based on the virtual machine anti-affinity relationship, the correspondence between virtual machines and hosts, and the maximum proportion of a quantity of virtual machines that can be shut down by network elements, N classification results and conflicting virtual machines corresponding to each batch of hosts in each classification result of the N classification results, where
for an i^{th} classification result, the dividing module 601 is further configured to:
   obtain a batch with a smallest host quantity in the i^{th} classification result, where i is not less than 1;
   transfer hosts in the batch with the smallest host quantity to a target batch based on conflicting virtual machines corresponding to each batch of hosts in the i^{th} classification result, to obtain an (i+1)^{th} classification result and conflicting virtual machines corresponding to each batch of hosts in the (i+1)^{th} classification result, where a batch quantity in the (i+1)^{th} classification result is less than a batch quantity in the i^{th} classification result, the target batch is a batch other than the batch with the smallest host quantity in the i^{th} classification result, and a quantity of conflicting virtual machines between the hosts in the batch with the smallest host quantity and hosts in the target batch is the smallest; and
   if i+1 is less than a preset value, set i=i+1, and repeatedly perform the foregoing steps; or if i+1 is equal to the preset value, the plurality of classification results between the network element and the virtual machines, and the conflicting virtual machines corresponding to each batch of hosts in each classification result are obtained, where when i=1, the 1^{st} classification result is a classification result with a largest batch quantity.

In another possible implementation, the dividing module 601 is configured to:
obtain, based on the virtual machine anti-affinity relationship, the correspondence between virtual machines and hosts, the maximum proportion of a quantity of virtual machines that can be shut down by network elements, and a plurality of preset values, the plurality of classification results between the hosts and the virtual machines in the to-be-restarted cloud operating system OS, and the conflicting virtual machines corresponding to each batch of hosts in each classification result, where the plurality of preset values correspond to the plurality of classification results.

In a possible implementation, the evaluating module 602 is configured to:
perform, in ascending order of batch quantities, simulated live migration evaluation on the conflicting virtual machines corresponding to each batch of hosts in each classification result of the plurality of classification results, to obtain the target classification result, where
when simulated live migration evaluation is performed on a j^{th} classification result in the plurality of classification results, the evaluating module 602 is further configured to:
   sequentially perform live migration simulation on conflicting virtual machines corresponding to each batch of hosts in the j^{th} classification result; and
   if the j^{th} classification result does not meet that conflicting virtual machines corresponding to each batch of hosts each correspond to a target host, set j=j+1, and repeatedly perform the foregoing steps; or if the conflicting virtual machines corresponding to each batch of hosts in the j^{th} classification result each correspond to a target host, use the j^{th} classification result as the target classification result, where the target host and the host corresponding to the conflicting virtual machine are in different batches, and a remaining resource corresponding to the target host is not less than a migration resource corresponding to the conflicting virtual machine; and when j=1, the first classification result is a classification result with a smallest batch quantity in the plurality of classification results.

For descriptions of the foregoing modules, refer to the descriptions of the foregoing method embodiments. Details are not described herein again.

It should be understood that division of the modules in the foregoing apparatuses is merely logical function division. During actual implementation, all or some of the modules may be integrated into one physical entity, or may be physically separated. In addition, the modules in the apparatus for restarting hosts in batches may be implemented in a form of software invoked by a processor. For example, the apparatus for restarting hosts in batches includes a processor. The processor is connected to a memory. The memory stores instructions, and the processor invokes the instructions stored in the memory, to implement any one of the foregoing methods or functions of each module in the apparatus. The processor is, for example, a general-purpose processor, for example, a central processing unit (central processing unit, CPU) or a microprocessor. The memory is a memory inside the apparatus or a memory outside the apparatus. Alternatively, the module in the apparatus may be implemented in a form of a hardware circuit, and functions of some or all units may be implemented by designing the hardware circuits. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (field programmable gate array, FPGA) is used as an example, and the field programmable gate array may include a large quantity of logic gate circuits. A configuration file is used to configure a connection relationship between logic gate circuits, to implement functions of some or all of the foregoing units. All modules of the foregoing apparatuses may be implemented in a form of software invoked by the processor, or all modules may be implemented in a form of the hardware circuit, or some modules may be implemented in a form of software invoked by the processor, and a remaining part may be implemented in a form of the hardware circuit.

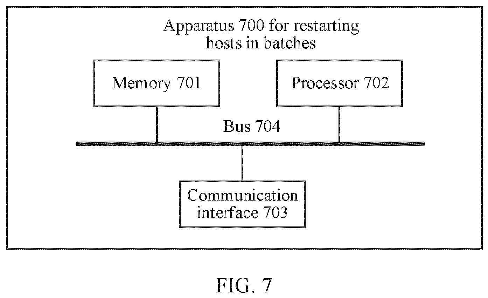

FIG. 7 is a diagram of a hardware structure of still another apparatus for restarting hosts in batches according to an embodiment of this application. An apparatus 700 for restarting hosts in batches (the apparatus 700 may be specifically a computer device) shown in FIG. 7 includes a memory 701, a processor 702, a communication interface 703, and a bus 704. The memory 701, the processor 702, and the communication interface 703 implement mutual communication connections through the bus 704.

The memory 701 may be a read-only memory (read-only memory, ROM), a static storage device, a dynamic storage device, or a random access memory (random access memory, RAM).

The memory 701 may store a program. When the program stored in the memory 701 is executed by the processor 702, the processor 702 and the communication interface 703 are configured to perform the steps of the method for restarting hosts in batches in embodiments of this application.

The processor 702 is a circuit having a signal processing capability. In an implementation, the processor 702 may be a circuit having an instruction reading and running capability, for example, a central processing unit CPU, a microprocessor, a graphics processing unit (graphics processing unit, GPU) (which may be understood as a microprocessor), or a digital signal processor (digital signal processor, DSP). In another implementation, the processor 702 may implement a specific function by using a logical relationship of a hardware circuit, and the logical relationship of the hardware circuit is fixed or reconfigurable. For example, the processor 702 is a hardware circuit implemented by an ASIC or a programmable logic device PLD, for example, an FPGA. In the reconfigurable hardware circuit, a process in which the processor loads a configuration file to implement hardware circuit configuration may be understood as a process in which the processor loads instructions to implement functions of some or all of the foregoing modules. In addition, the processor may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). The processor 702 is configured to execute a related program, to implement functions that need to be performed by units in the apparatus for restarting hosts in batches in embodiments of this application, or perform the method for restarting hosts in batches in the method embodiments of this application.

It can be learned that each module in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the modules of the apparatus may be integrated, or may be implemented independently. In an implementation, the modules may be integrated together and implemented in a form of a system-on-chip (system-on-a-chip, SoC). The SoC may include at least one processor, configured to implement any one of the methods or implement functions of the modules of the apparatus. Types of the at least one processor may be different, for example, the at least one processor includes a CPU and an FPGA, a CPU and an artificial intelligence processor, or a CPU and a GPU.

The communication interface 703 uses a transceiver apparatus, for example, but not limited to, a transceiver, to implement communication between the apparatus 700 and another device or another communication network. For example, data may be obtained through the communication interface 703.

The bus 704 may include a path for transferring information between the components (for example, the memory 701, the processor 702, and the communication interface 703) of the apparatus 700.

It should be noted that although the apparatus 700 shown in FIG. 7 only shows the memory, the processor, and the communication interface, in a specific implementation process, a person skilled in the art should understand that the apparatus 700 further includes other components that are necessary to implement normal running. In addition, based on a specific requirement, a person skilled in the art should understand that the apparatus 700 may further include hardware components for implementing other additional functions. In addition, a person skilled in the art should understand that the apparatus 700 may include only components necessary for implementing embodiments of this application, but does not need to include all components shown in FIG. 7.

An embodiment of this application further provides a computer-readable storage medium. The computer-readable storage medium stores instructions. When the instructions are run on a computer or a processor, the computer or the processor is enabled to perform one or more steps in any one of the foregoing methods.

An embodiment of this application further provides a computer program product including instructions. When the computer program product is run on a computer or a processor, the computer or the processor is enabled to perform one or more steps in any one of the foregoing methods.

It should be understood that unless otherwise specified, "/" in the descriptions of this application indicates an "or" relationship between associated objects. For example, A/B may indicate A or B. A and B may be singular or plural. In addition, in the descriptions of this application, "a plurality of" means two or more than two unless otherwise specified. "At least one item (piece) of the following" or a similar expression thereof means any combination of these items, including any combination of a singular item (piece) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not limit a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In the several embodiments provided in this application, it should be understood that the disclosed system, apparatus, and method may be implemented in other manners. For example, division into the units is merely logical function division and may be another division in actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

All or some of the foregoing embodiments may be implemented by using software, hardware, firmware, or any combination thereof. When software is used to implement the foregoing embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium, or transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, like a server or a data center that integrates one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid-state drive (solid-state disk, SSD).

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A method for restarting hosts in batches, comprising:
obtaining, based on a virtual machine anti-affinity relationship, a correspondence between virtual machines and hosts, and a maximum proportion of a quantity of virtual machines that can be shut down by network elements, a plurality of classification results between hosts and virtual machines in a to-be-restarted cloud operating system OS, and conflicting virtual machines corresponding to each batch of hosts in each classification result, wherein each classification result corresponds to a different host batch quantity, and each batch of hosts comprises at least one host;
performing simulated live migration evaluation on the conflicting virtual machines corresponding to each batch of hosts in each classification result of the plurality of classification results, to obtain a target classification result, wherein the target classification result is a classification result that has a smallest batch quantity in the plurality of classification results and in which conflicting virtual machines corresponding to each batch of hosts can be migrated to another batch of hosts; and
separately performing a restart operation on each batch of hosts in the cloud OS based on the target classification result.

2. The method according to claim 1, wherein the obtaining, based on a virtual machine anti-affinity relationship, a correspondence between virtual machines and hosts, and a maximum proportion of a quantity of virtual machines that can be shut down by network elements, a plurality of classification results between hosts and virtual machines in the to-be-restarted cloud operating system OS, and conflicting virtual machines corresponding to each batch of hosts in each classification result comprises:
obtaining, based on the virtual machine anti-affinity relationship, the correspondence between virtual machines and hosts, and the maximum proportion of a quantity of virtual machines that can be shut down by network elements, N classification results and conflicting virtual machines corresponding to each batch of hosts in each classification result of the N classification results, wherein
for an i^{th} classification result, the method further comprises:
obtaining a batch with a smallest host quantity in the i^{th} classification result, wherein i is not less than 1;
transferring hosts in the batch with the smallest host quantity to a target batch based on conflicting virtual machines corresponding to each batch of hosts in the i^{th} classification result, to obtain an (i+1)^{th} classification result and conflicting virtual machines corresponding to each batch of hosts in the (i+1)^{th} classification result, wherein a batch quantity in the (i+1)^{th} classification result is less than a batch quantity in the i^{th} classification result, the target batch is a batch other than the batch with the smallest host quantity in the i^{th} classification result, and a quantity of conflicting virtual machines between the hosts in the batch with the smallest host quantity and hosts in the target batch is the smallest; and
if i+1 is less than a preset value, setting i=i+1, and repeatedly performing the foregoing steps; or if i+1 is equal to the preset value, obtaining the plurality of classification results between the network element and the virtual machines, and the conflicting virtual machines corresponding to each batch of hosts in each classification result, wherein when i=1, the 1^{st} classification result is a classification result with a largest batch quantity.

3. The method according to claim 1, wherein the obtaining, based on a virtual machine anti-affinity relationship, a correspondence between virtual machines and hosts, and a maximum proportion of a quantity of virtual machines that can be shut down by network elements, a plurality of classification results between hosts and virtual machines in the to-be-restarted cloud operating system OS, and conflicting virtual machines corresponding to each batch of hosts in each classification result comprises:
obtaining, based on the virtual machine anti-affinity relationship, the correspondence between virtual machines and hosts, the maximum proportion of a quantity of virtual machines that can be shut down by network elements, and a plurality of preset values, the plurality of classification results between the hosts and the virtual machines in the to-be-restarted cloud operating system OS, and the conflicting virtual machines corresponding to each batch of hosts in each classification result, wherein the plurality of preset values correspond to the plurality of classification results.

4. The method according to any one of claims 1 to 3, wherein the performing simulated live migration evaluation on the conflicting virtual machines corresponding to each batch of hosts in each classification result of the plurality of classification results, to obtain a target classification result comprises:
performing, in ascending order of batch quantities, simulated live migration evaluation on the conflicting virtual machines corresponding to each batch of hosts in each classification result of the plurality of classification results, to obtain the target classification result, wherein
when simulated live migration evaluation is performed on a j^{th} classification result in the plurality of classification results, the method further comprises:
sequentially performing live migration simulation on conflicting virtual machines corresponding to each batch of hosts in the j^{th} classification result; and
if the j^{th} classification result does not meet that conflicting virtual machines corresponding to each batch of hosts each correspond to a target host, setting j=j+1, and repeatedly performing the foregoing steps; or if the conflicting virtual machines corresponding to each batch of hosts in the j^{th} classification result each correspond to a target host, using the j^{th} classification result as the target classification result, wherein the target host and the host corresponding to the conflicting virtual machine are in different batches, and a remaining resource corresponding to the target host is not less than a migration resource corresponding to the conflicting virtual machine; and when j=1, the first classification result is a classification result with a smallest batch quantity in the plurality of classification results.

5. An apparatus for restarting hosts in batches, comprising:
a dividing module, configured to obtain, based on a virtual machine anti-affinity relationship, a correspondence between virtual machines and hosts, and a maximum proportion of a quantity of virtual machines that can be shut down by network elements, a plurality of classification results between hosts and virtual machines in the to-be-restarted cloud operating system OS, and conflicting virtual machines corresponding to each batch of hosts in each classification result, wherein each classification result corresponds to a different host batch quantity, and each batch of hosts comprises at least one host;
an evaluating module, configured to perform simulated live migration evaluation on the conflicting virtual machines corresponding to each batch of hosts in each classification result of the plurality of classification results, to obtain a target classification result, wherein the target classification result is a classification result that has a smallest batch quantity in the plurality of classification results and in which conflicting virtual machines corresponding to each batch of hosts can be migrated to another batch of hosts; and
an operating module, configured to separately perform a restart operation on each batch of hosts in the cloud OS based on the target classification result.

6. The apparatus according to claim 5, wherein the dividing module is configured to:
obtain, based on the virtual machine anti-affinity relationship, the correspondence between virtual machines and hosts, and the maximum proportion of a quantity of virtual machines that can be shut down by network elements, N classification results and conflicting virtual machines corresponding to each batch of hosts in each classification result of the N classification results, wherein
for an i^{th} classification result, the dividing module is further configured to:
obtain a batch with a smallest host quantity in the i^{th} classification result, wherein i is not less than 1;
transfer hosts in the batch with the smallest host quantity to a target batch based on conflicting virtual machines corresponding to each batch of hosts in the i^{th} classification result, to obtain an (i+1)^{th} classification result and conflicting virtual machines corresponding to each batch of hosts in the (i+1)^{th} classification result, wherein a batch quantity in the (i+1)^{th} classification result is less than a batch quantity in the i^{th} classification result, the target batch is a batch other than the batch with the smallest host quantity in the i^{th} classification result, and a quantity of conflicting virtual machines between the hosts in the batch with the smallest host quantity and hosts in the target batch is the smallest; and
if i+1 is less than a preset value, set i=i+1, and repeatedly perform the foregoing steps; or if i+1 is equal to the preset value, obtain the plurality of classification results between the network element and the virtual machines, and the conflicting virtual machines corresponding to each batch of hosts in each classification result, wherein when i=1, the 1^{st} classification result is a classification result with a largest batch quantity.

7. The apparatus according to claim 5, wherein the dividing module is configured to:
obtain, based on the virtual machine anti-affinity relationship, the correspondence between virtual machines and hosts, the maximum proportion of a quantity of virtual machines that can be shut down by network elements, and a plurality of preset values, the plurality of classification results between the hosts and the virtual machines in the to-be-restarted cloud operating system OS, and the conflicting virtual machines corresponding to each batch of hosts in each classification result, wherein the plurality of preset values correspond to the plurality of classification results.

8. The apparatus according to any one of claims 5 to 7, wherein the evaluating module is configured to:
perform, in ascending order of batch quantities, simulated live migration evaluation on the conflicting virtual machines corresponding to each batch of hosts in each classification result of the plurality of classification results, to obtain the target classification result, wherein
when simulated live migration evaluation is performed on a j^{th} classification result in the plurality of classification results, the evaluating module is further configured to:
sequentially perform live migration simulation on conflicting virtual machines corresponding to each batch of hosts in the j^{th} classification result; and
if the j^{th} classification result does not meet that conflicting virtual machines corresponding to each batch of hosts each correspond to a target host, set j=j+1, and repeatedly perform the foregoing steps; or if the conflicting virtual machines corresponding to each batch of hosts in the j^{th} classification result each correspond to a target host, use the j^{th} classification result as the target classification result, wherein the target host and the host corresponding to the conflicting virtual machine are in different batches, and a remaining resource corresponding to the target host is not less than a migration resource corresponding to the conflicting virtual machine; and when j=1, the first classification result is a classification result with a smallest batch quantity in the plurality of classification results.

9. An apparatus for restarting hosts in batches, comprising a processor and a memory, wherein the memory is configured to store program code, and the processor is configured to invoke the program code to perform the method according to any one of claims 1 to 4.

10. A computer-readable storage medium, wherein the computer-readable storage medium stores a computer program, and the computer program is executed by a processor, to implement the method according to any one of claims 1 to 4.

11. A computer program product, wherein when the computer program product is run on a computer, the computer is enabled to perform the method according to any one of claims 1 to 4.

12. A chip system, wherein the chip system is used in an electronic device, the chip system comprises one or more interface circuits and one or more processors, the interface circuit and the processor are interconnected through a line, the interface circuit is configured to receive a signal from a memory of the electronic device, and send the signal to the processor, wherein the signal comprises computer instructions stored in the memory, and when the processor executes the computer instructions, the electronic device performs the method according to any one of claims 1 to 4.
